# EUROPEAN PATENT APPLICATION

(11) **EP 2 799 955 A2**
(43) Date of publication of application: **05.11.2014**
(21) Application number: 14153632.6
(22) Date of filing: 03.02.2014
(51) Int. Cl.: G06F 3/03, G06F 3/038

(54) **Light sensing module and system**

(30) Priority: 29.04.2013 US 201361817306 P; 29.09.2013 CN 201310459599
(71) Applicant: Lite-On Semiconductor Corporation, New Taipei City 231 (TW)
(72) Inventor: Zhan, Peng-Han, 235 New Taipei City (TW)
(74) Representative: Becker Kurig Straus

(57) **Abstract**

A light sensing module and a processor incorporated in a light sensing system which includes at least one light source, for emitting light; at least one light sensor, for sensing the light emitted by the at least one light source or light reflected by an ambient object or ambient light, in order to obtain a sensing result; a control unit, for performing image detection and object identification or ambient light sensing by computing the sensing result to generate a computational result; and at least one interrupt driver, for sending an interrupt signal to the processor, in order to notify the processor to receive the computational result; wherein the processor deploys the type and the number of the at least one light sensor, and configures the control unit accordingly, so that the control unit performs computation on the sensing result to generate the computational result.

## Description

### Field of the Invention

The present invention relates to a light sensing module and system, and more particularly, to a light sensing module and system capable of performing image sensing and object identification.

### Background of the Invention

With advancements in technology, mobile devices such as smart phones and tablets have become near-indispensable in modern daily life. Compared with conventional mobile phones that only have communication functions, modern mobile devices combine various functions such as communication, networking, photographing, games and data processing. This type of multifunctional design is more attractive to consumers.

Since mobile devices are equipped with diversified functions, various sensing devices have to be utilized for sensing peripheral environments in order to perform corresponding applications. For example, when a user uses the photographing functions, face recognition techniques are often utilized for focus. When the user plays a motion sensing game, subtle sensing devices are required to perform gesture recognition or object identification. With advancements in three dimensional (3D) display technology, a mobile device needs more complicated sensing devices to perform 3D image sensing and processing. However each sensing device in the current mobile device has a distinctive sensing function and needs to be operated separately. Presently, there is no available sensing system which is capable of integrating various types of sensing devices. Thus, there is a need for improvement over the prior art.

### Summary of the Invention

This in mind, the application aims at providing a light sensing module and system in order to solve the abovementioned problems.

This is achieved by a light sensing module and system according to claims 1 and 8. The dependent claims pertain to corresponding further developments and improvements.

As will be seen more clearly from the detailed description following below, the claimed light sensing module is used in a light sensing system wherein the light sensing system is incorporated with a processor. The claimed light sensing module comprises at least one light source of one or more types, for emitting light; at least one light sensor of one or more types for sensing the light emitted by the at least one light source or light reflected by an ambient object or ambient light, in order to obtain a sensing result; a control unit, for performing image detection and object identification or ambient light sensing by computing the sensing result to generate a computational result; and at least one interrupt driver, for sending an interrupt signal to the processor, in order to notify the processor to receive the computational result; wherein the processor deploys the type and the number of the at least one light sensor, and configures the control unit accordingly, so that the control unit performs computation on the sensing result to generate the computational result.

### Brief Description of the Drawings

FIG. 1 is a schematic diagram of a light sensing module according to an embodiment of the present invention.
FIG. 2 is a schematic diagram of a general light sensing system.
FIG. 3 is a schematic diagram of a light sensing module according to an embodiment of the present invention.
FIG. 4 is a schematic diagram of a general 3D image sensing system.
FIG. 5 is a schematic diagram of a light sensing system according to an embodiment of the present invention.
FIG. 6 is a schematic diagram of a light sensing system according to an embodiment of the present invention.

### Detailed Description

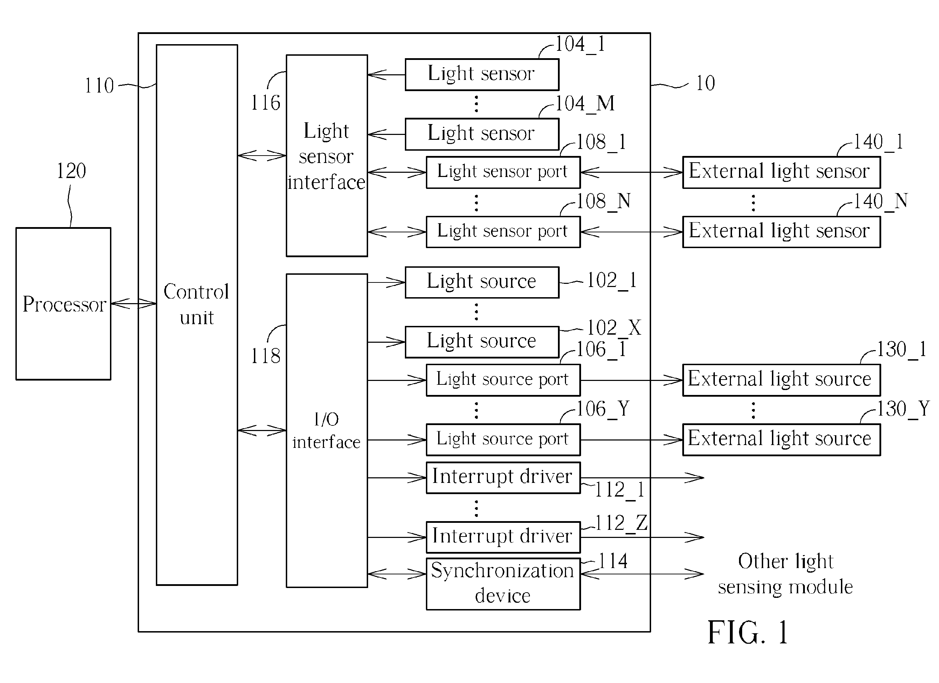

FIG. 1 is a schematic diagram of a light sensing module 10 according to an embodiment of the present invention. As shown in FIG. 1, the light sensing module 10 includes light sources 102_1-102_X, light sensors 104_1-104_M, light source ports 106_1-106_Y, light sensor ports 108_1-108_N, a control unit 110, interrupt drivers 112_1-112_Z, a synchronization device 114, a light sensor interface 116 and an I/O interface 118. The light sensing module 10 is electrically connected to a processor 120, which controls the operations of the light sensing module 10. The light sources 102_1-102_X are utilized for emitting light. The light may be reflected when reaching an object, and object identification may be performed accordingly. The light source ports 106_1-106_Y, which are externally connected to external light sources 130_1-130_Y respectively, may drive the external light sources 130_1-130_Y to emit light. The control unit 110 may deploy the type and the number of the light sources 102_1-102_X and the light source ports 106_1-106_Y according to configurations of the processor 120. According to system requirements, the user may deploy more commonly used light sources as the light sources 102_1-102_X, and deploy less used light sources as the external light sources 130_1-130_Y. The external light sources 130_1-130_Y are externally connected to the light source ports 106_1-106_Y only when they are needed, in order to save on area and cost of the system. The light sensors 104_1-104_M are utilized for detecting the light emitted by the light sources 102_1-102_X or the external light sources 130_1-130_Y, as well as light reflected by peripheral objects or ambient light, in order to obtain a sensing result. The light sensor ports 108_1-108_N, which are externally connected to the external light sensors 140_1-140_N, respectively, may be utilized for transmitting data detected by the external light sensors 140_1-140_N. Similarly, the processor 120 may arbitrarily deploy the type and number of the light sensors 104_1-104_M and the number of the light sensor ports 108_1-108_N. According to system requirements, the user may deploy more commonly used light sensors as the light sensors 104_1-104_M, and deploy less used light sensors as the external light sensors 140_1-140_N. The external light sensors 140_1-140_N are externally connected to the light sensor ports 108_1-108_N only when they are needed, in order to save on area and cost of the system.

When gesture recognition or object identification is performed, the light sources 102_1-102_X or the external light sources 130_1-130_Y may emit light, and the light sensors 104_1-104_M and the external light sensors 140_1-140_N detect the reflected light. Accordingly, the light sensors 104_1-104_M and the external light sensors 140_1-140_N may detect locational information such as the movement or distance of the object, in order to perform the object identification. The light sources 102_1-102_X and the external light sources 130_1-130_Y may be composed of various materials or elements which are able to emit light, e.g. light emitting diodes (LED). In some embodiments, the light sources 102_1-102_X or the external light sources 130_1-130_Y may be realized by infrared LEDs, and thus the corresponding light sensors 104_1-104_M or external light sensors 140_1-140_N have to be implemented as infrared sensors for performing the detection. The light sensors 104_1-104_M and the external light sensors 140_1-140_N may include a proximity sensor, ambient light sensor, color sensor, and image sensor, etc. Different types of detectors may be implemented for different applications.

According to the sensing results of the light sensors 104_1-104_M or the external light sensors 140_1-140_N and the configurations of the processor, the control unit 110 may integrate the sensing results of various light sensors and perform the image sensing, object identification or ambient light sensing via computation in order to generate a computational result. For example, in order to perform the gesture recognition, the light sensors 104_1-104_M and the external light sensors 140_1-140_N may include a proximity sensor and an ambient light sensor. The ambient light sensor, which may be utilized for detecting the location of a user's hand, may obtain movement information of the hand via the locations detected at different time points. The proximity sensor, which may be utilized for detecting the distance between the hand and the device, may obtain information related to proximity movement of the hand via the distances detected at different time points. The control unit 110 may combine the sensing results generated from the ambient light sensor and the proximity sensor and obtain the accurate location and movement of the gesture via computation, in order to accomplish the gesture recognition. In another embodiment, the processor 120 may configure the light sensing module 10 to perform 3D image sensing, and thus the light sensing module 10 may include two light sensors 104_L and 104_R located in different locations for simulating the gaze of a user's left eye and right eye, respectively. The control unit 110 obtains the sensing results from the light sensors 104_L and 104_R, respectively, and then performs follow-up operations and processing by simulating the visual processing analogous to human eyes, in order to generate the computational results.

The interrupt drivers 112_1-112_Z are utilized for sending interrupt signals to the processor 120, in order to notify the processor 120 to receive the computational results. In general, the processor 120 may be a central processing unit (CPU), a microprocessor, or a micro control unit (MCU), etc. The processor 120 may control the operations of the light sensing system and the light sensing module, and may also be utilized for controlling the entire operations of the mobile device. In such a condition, the processor 120 may not deploy all resources for processing data of the light sensing system or the light sensing module. In order to prevent the operations of the light sensing module 10 from being interfered with by the operations of other devices, the light sensing module 10 may only notify the processor 120 to read the computational results when the computational results are generated by the control unit 110. At this moment, the interrupt drivers 112_1-112_Z may be utilized for sending interrupt signals. After the processor 120 receives an interrupt signal, the processor 120 may learn that the control unit 110 obtains a specific computational result and deploy resources for receiving the result. If the processor 120 does not receive any interrupt signals, the processor 120 may deploy the resources for other devices, and thus may not need to keep detecting or monitoring the control unit 110. As a result, the resources of the processor 120 may be utilized more efficiently. For example, when gesture recognition is performed, the system is triggered due to variations in the gesture; hence the interrupt drivers 112_1-112_Z may need to send an interrupt signal to notify the processor 120 to receive data only when the gesture varies.

The synchronization device 114 of the light sensing module 10 is utilized for connecting other light sensing modules. In general, a light sensing system may include at least one light sensing module, each of which has light sources and light sensors. When a light sensing system includes a plurality of light sensing modules, the processor 120 has to execute operations corresponding to the sensing results generated by these light sensing modules. It is to be noted that the data outputted by different light sensing modules have to be synchronized. In such a condition, the synchronization device 114 may be connected to other light sensing modules and utilized for synchronizing the output data generated from each light sensing module, so that the control device 110 may effectively integrate the output data of each light sensing module. For example, in the above embodiment of 3D image sensing, the light sensors for simulating the left eye and the right eye may be implemented by two different light sensing modules. The light sensing system may integrate the data generated from these two light sensors. The synchronization device then performs synchronization and outputs the data to the processor 120, in order to achieve 3D image sensing.

The light sensor interface 116 and the I/O interface 118, which are utilized as connection interfaces of the light sensing module 10, are electrically connected between the control unit 110 and each device of the light sensing module 10. As shown in FIG. 1, one terminal of the light sensor interface 116 is connected to the control unit 110, and the other terminal of the light sensor interface 116 is connected to the light sensors 104_1-104_M and the light sensor ports 108_1-108_N. The light sensor interface 116 provides a medium for signal transmission so that the control unit 110 may control the operations of the light sensors 104_1-104_M and the external light sensors 140_1-140_N and receive the sensing results generated from the light sensors 104_1-104_M and the external light sensors 140_1-140_N. One terminal of the I/O interface 118 is connected to the control unit 110, and the other terminal of the I/O interface 118 is connected to the light sources 102_1-102_X, the light source ports 106_1-106_Y, the interrupt drivers 112_1-112_Z and the synchronization device 114. The I/O interface 118 provides a medium for signal transmission so that the control unit 110 may drive the operations of the light sources 102_1-102_X and the light source ports 106_1-106_Y, and control the interrupt drivers 112_1-112_Z to send interrupt signals and control the synchronization operations of the synchronization device 114. It is to be noted that the implementation of the light sensor interface 116 and the I/O interface 118 described here is only one of various embodiments of the connection interface. The control unit 110 may be connected to other devices through other types of interfaces or in other manners, and should not be limited to what is described herein.

When the light sensing module 10 is operated, the processor 120 may deploy the type and number of the light sensors 104_1-104_M and the external light sensors 140_1-140_N according to system requirements, and configure various parameters of all light sensors such as resolution and sensing frequency. The processor 120 then controls the control unit 110 to perform corresponding settings such as the strength of output signals, the type of output signals and the strength of driving signals according to the above configurations. In several embodiments (e.g. an object identification application), when a light source is required, the control unit 110 may distribute the types and numbers of the light sources 102_1-102_X and the external light sources 130_1-130_Y. The control unit 110 then timely drives the light sources 102_1-102_X or the external light sources 130_1-130_Y for corresponding applications. After the control unit 110 obtains the sensing results, the control unit 110 may perform computation or analysis on the sensing results according to the above settings, in order to convert the sensing results into computational results which will be outputted to the processor 120. For example, when gesture recognition is performed, the sensing results generated by the light sensors 104_1-104_M or the external light sensors 140_1-140_N may be the location of the user's hand at each time point, and the computational results generated via the computation or analysis of the control unit 110 may be meaningful gestures, such as zooming, page turning and moving.

It is notable that the present invention may integrate various image sensors and light sensors, in order to implement various applications such as gesture recognition, face recognition, 3D imaging, information security and interactive games. Those skilled in the art can make modifications and alternations accordingly. For example, the types and numbers of the abovementioned light sources 102_1-102_X, external light sources 130_1-130_Y, light sensors 104_1-104_M and external light sensors 140_1-140_N may arbitrarily be adjusted according to system requirements. In the process of sensing, such modules or devices may also be adjusted dynamically according to the variations of the sensing mode. The light sensing module 10 may be realized in different ways. In an embodiment, the light sensing module 10 may be realized by a system on a chip (SoC), where the cost of the light sensing modules may be significantly reduced when the light sensing modules are integrated into a single chip. In an embodiment, if the system is utilized for sensing 3D images and needs multiple light sensing points, a light sensing system having multiple light sensing modules may be utilized, and each light sensing module may be realized by an SoC. As a result, the light sensing system may still achieve diversified functions even when the cost is limited. The light sensing module 10 may be realized inside any type of integrated circuit (IC) packages, and is not limited to what is described herein.

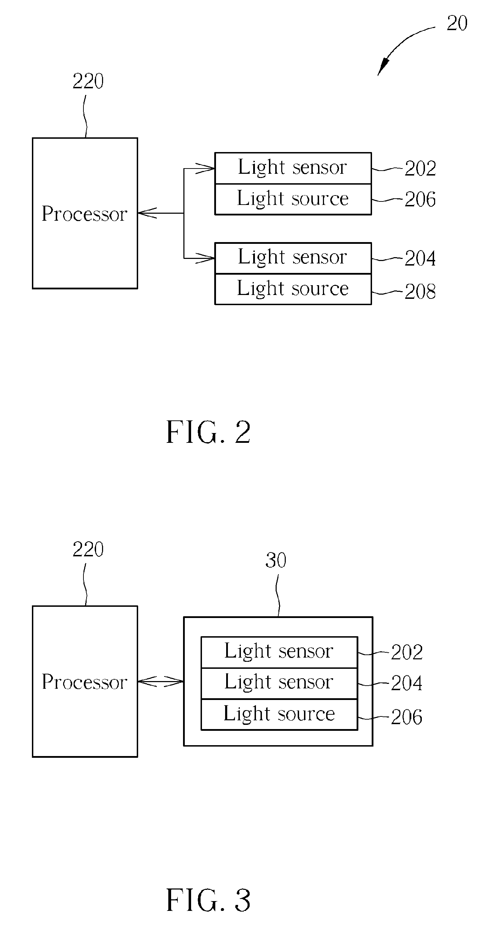

FIG. 2 is a schematic diagram of a general light sensing system 20. As shown in FIG. 2, the light sensing system 20 includes light sensors 202, 204 and light sources 206, 208. The light sensing system 20 is electrically connected to a processor 220, which controls the operations of the light sensing system 20. The light sensor 202 and the light source 206 may co-operate to perform various light sensing functions, and the light sensor 204 and the light source 208 may also co-operate to perform light sensing functions. In comparison, the present invention may integrate various light sensors and light sources into a light sensing module. FIG. 3 is a schematic diagram of a light sensing module 30 according to an embodiment of the present invention. As shown in FIG. 3, the light sensors 202 and 204 may be integrated into the light sensing module 30. If the light sources 206 and 208 are utilized for emitting light having the same frequency, only one light source (e.g. the light source 206) is needed in the light sensing module 30 to realize light sensing functions of both light sensors 202 and 204. According to the integration of the light sensing module 30, at least two benefits can be achieved. The number of light sources may be reduced, which reduces the area and cost of the system. The processor 220 may not need to process the operations of multiple light sensors simultaneously. Since a control unit (not illustrated) of the light sensing module 30 may integrate the sensing results generated by all light sensors in the light sensing module 30, the processor 220 may only need to communicate with the control unit, which significantly reduces the load of the processor 220. In addition, the light sensing module 30 may also be realized by an SoC, which further reduces the cost.

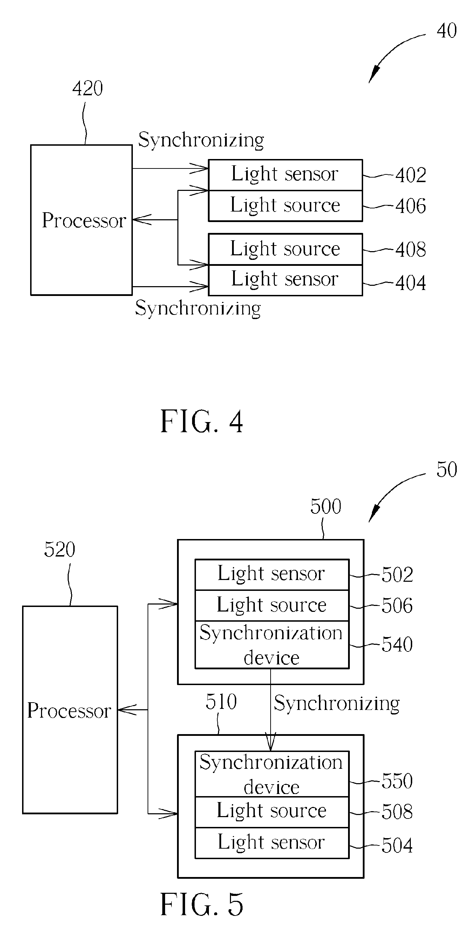

FIG. 4 is a schematic diagram of a general 3D image sensing system 40. As shown in FIG. 4, the 3D image sensing system 40 includes light sensors 402, 404 and light sources 406, 408. The 3D image sensing system 40 is electrically connected to a processor 420, which controls the operations of the 3D image sensing system 40. The light sensor 402 and the light source 406 may co-operate to simulate the gaze of a user's left eye, and the light sensor 404 and the light source 408 may co-operate to simulate the gaze of a user's right eye. The processor 420 is electrically connected to both the light sensors 402 and 404, in order to perform the synchronization between the light sensors 402 and 404. In comparison, according to the light sensing modules and systems of the present invention, the light sensing modules may be synchronized with each other via a synchronization device. FIG. 5 is a schematic diagram of a light sensing system 50 according to an embodiment of the present invention. When performing 3D image simulation, different light sensing modules may be utilized for simulating the gaze of the user's left eye and right eye, respectively. As shown in FIG. 5, the light sensing system 50 includes light sensing modules 500 and 510. In the light sensing module 500, a light sensor 502 and a light source 506 may co-operate to simulate the gaze of the user's left eye. The light sensing module 500 further includes a synchronization device 540, which is utilized for performing synchronization. In the light sensing module 510, a light sensor 504 and a light source 508 may co-operate to simulate the gaze of the user's right eye. The light sensing module 510 further includes a synchronization device 550, which is utilized for performing synchronization. The synchronization device 540 is electrically connected to the synchronization device 550, in order to transmit synchronizing signals between the two for performing synchronization. As a result, the synchronization may be performed inside the light sensing system 50, so that the processor 520 may not have to process the synchronization between different light sensors. This significantly reduces the load of the processor 520.

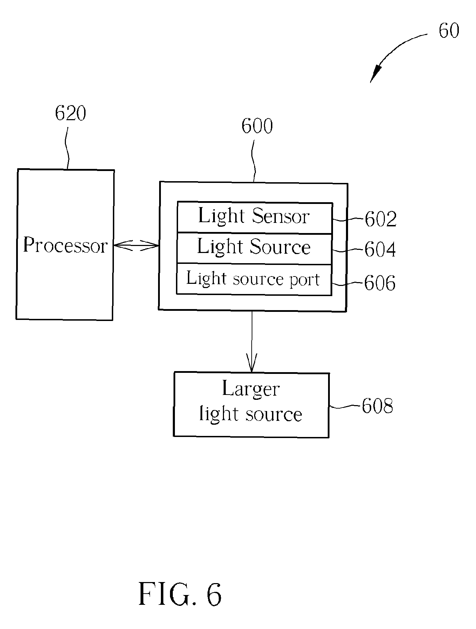

FIG. 6 is a schematic diagram of a light sensing system 60 according to an embodiment of the present invention. As shown in FIG. 6, the light sensing system 60 includes a light sensing module 600, which is utilized for performing face recognition. The light sensing module 600 includes a light sensor 602, a light source 604 and a light source port 606. The light sensing module 600 is electrically connected to a processor 620, which controls the operations of the light sensing module 600. As mentioned above, the light sensing modules of the present invention may be selectively connected to external light sensors or external light sources via light sensor ports or light source ports, which increases the flexibility in the usage of light sensors or light sources. For the light sensing module 600 that performs face recognition, a greater light source should sometimes be utilized; hence, a larger light source 608 may be externally connected to the light source port 606, wherein the light source 608 may be turned on when in use, and turned off or removed when not in use. As a result, the flexibility of using the light sources may be increased. When the larger or less used light source 608 is externally connected, the size and cost of the light sensing module 600 may also be reduced.

In addition to possessing the abovementioned benefits, the present invention may also be used for other applications, such as information security or games. For performing information security, the user may predefine a specific gesture as a password to turn on a mobile device, or utilize more complex procedures such as eyeball identification or fingerprint identification to perform information security. For the games application, especially motion sensing games, the gestures and actions of the user may be detected to achieve the interaction. In other applications, the light sensing module of the present invention may also be considered as a human-based input interface, e.g. the user may use gestures to simulate movements of a mouse. Any types of applications related to devices or elements for image identification or optical sensing may all be included in the light sensing modules or light sensing systems of the present invention, and is not limited to what is described herein.

In the prior art, each sensing device in the mobile device has a distinctive sensing function and is operated separately. There is no available sensing system capable of integrating various types of sensing devices. In comparison, the present invention provides a light sensing module and light sensing system, which are capable of integrating various image sensors and light sensors, in order to perform applications such as gesture recognition, face recognition, 3D display, information security and interactive games or other.

## Claims

1. A light sensing module (10) and a processor (120) incorporated in a light sensing system (50) **characterized by** the light sensing module (10) comprising:
a specific number of at least one light source (102_1-102_X) of one or more specific types for emitting light;
a specific number of at least one light sensor (104_1-104_M) of one or more specific types for sensing the light emitted by the at least one light source (102_1-102_X) or light reflected by an ambient object or ambient light in order to obtain a sensing result;
a control unit (110) for performing image detection and object identification or ambient light sensing by computing the sensing result to generate a computational result; and
at least one interrupt driver (112_1-112_Z) for sending an interrupt signal to the processor (120) in order to notify the processor (120) to receive the computational result;
wherein the processor (120) deploys the specific type and the specific number of the at least one light sensor (104_1-104_M), and configures the control unit (110) accordingly, so that the control unit (110) is able to perform computation on the sensing result to generate the computational result.

2. The light sensing module (10) of claim 1, **characterized in that** the at least one light sensor (104_1-104_M) of a specific type comprises a proximity sensor, an ambient light sensor, a color sensor and/or an image sensor.

3. The light sensing module (10) of claim 1, **characterized in that** the at least one light source (102_1-102_X) comprises a light emitting diode (LED hereafter) and/or an infrared LED.

4. The light sensing module (10) of claim 1, further comprising:
a light sensor interface (116) electrically connected between the control unit (110) and the at least one light sensor (104_1-104_M);
an I/O interface (118) electrically connected between the control unit (110) and the at least one light source (102_1-102_X) and the interrupt driver (112_1-112_Z);
at least one light sensor port (108_1-108_N), electrically connected to the light sensor interface (116), for externally connecting to a specific number of at least one second light sensor (140_1-140_N) of one or more specific types;
at least one light source port (106_1-106_Y), electrically connected to the I/O interface (118), for externally connecting to a specific number of at least one second light source (130_1-130_Y) of one or more specific types; and
a synchronization device (114), electrically connected to the I/O interface (118), for connecting to another light sensing module in order to synchronize the light sensing module (10) with the other light sensing module.

5. The light sensing module (10) of claim 4, **characterized in that** the processor (120) deploys the specific type and the specific number of the at least one second light sensor (140_1-140_N) and configures the control unit (110) accordingly.

6. The light sensing module (10) of claim 4, **characterized in that** the control unit (110) further deploys the specific type and the specific number of the at least one light source (102_1-102_X) and the at least one second light source (130_1-130_Y) according to configurations of the processor (120).

7. The light sensing module (10) of claim 1, **characterized in that** the light sensing module (10) is realized by a system on a chip or an integrated circuit package.

8. A light sensing system (50), **characterized by** the light sensing system (50) comprising:
a processor (120); and
at least one light sensing module, each light sensing module (10) comprising:
a specific number of at least one light source (102_1-102_X) of one or more specific types for emitting light;
a specific number of at least one light sensor (104_1-104_M) of one or more specific types for sensing the light emitted by the at least one light source (102_1-102_X) or light reflected by an ambient object or ambient light, in order to obtain a sensing result;
a control unit (110), for performing image detection and object identification or ambient light sensing by computing the sensing result to generate a computational result; and
at least one interrupt driver (112_1-112_Z) for sending an interrupt signal to the processor (120) in order to notify the processor (120) to receive the computational result;
wherein the processor (120) deploys the specific type and the specific number of the at least one light sensor (104_1-104_M), and configures the control unit (110) accordingly, so that the control unit (110) is able to perform computation on the sensing result to generate the computational result.

9. The light sensing system (50) of claim 8, **characterized in that** the at least one light sensor (104_1-104_M) of a specific type comprises a proximity sensor, an ambient light sensor, a color sensor and/or an image sensor.

10. The light sensing system (50) of claim 8, **characterized in that** the at least one light source (102_1-102_X) comprises a light emitting diode (LED hereafter) and/or an infrared LED.

11. The light sensing system (50) of claim 8, **characterized in that** the light sensing module (10) further comprises:
a light sensor interface (116), electrically connected between the control unit (110) and the at least one light sensor (104_1-104_M); and
an I/O interface (118), electrically connected between the control unit (110) and the at least one light source (102_1-102_X) and the interrupt driver (112_1-112_Z);
at least one light sensor port (108_1-108_N), electrically connected to the light sensor interface (116), for externally connecting to a specific number of at least one second light sensor (140_1-140_N) of one or more specific types;
at least one light source port (106_1-106_Y), electrically connected to the I/O interface (118), for externally connecting to a specific number of at least one second light source (130_1-130_Y) of one or more specific types; and
a synchronization device (114), electrically connected to the I/O interface (118), for connecting to another light sensing module among the at least one light sensing module, in order to synchronize the light sensing module (10) with the other light sensing module.

12. The light sensing system (50) of claim 11, **characterized in that** the processor (120) deploys the specific type and the specific number of the at least one second light sensor (140_1-140_N), and configures the control unit (110) accordingly.

13. The light sensing system (50) of claim 11, **characterized in that** the control unit (110) further deploys the specific type and the specific number of the at least one light source (102_1-102_X) and at least one the second light source (130_1-130_Y) according to configurations of the processor (120).

14. The light sensing system (50) of claim 8, **characterized in that** the light sensing module (10) is realized by a system on a chip or an integrated circuit package.
